Europäisches Patentamt

European Patent Office

Office européen des brevets

(11) Publication number: **0 455 147 A1**

# EUROPEAN PATENT APPLICATION

(21) Application number: **91106737.9**

(22) Date of filing: **25.04.91**

(51) Int. Cl.⁵: **G06F 3/033**

(30) Priority: **27.04.90 JP 114739/90**

(43) Date of publication of application:
**06.11.91 Bulletin 91/45**

(84) Designated Contracting States:
**DE FR GB**

(71) Applicant: **SONY CORPORATION**
**7-35, Kitashinagawa 6-chome Shinagawa-ku**
**Tokyo(JP)**

(72) Inventor: **Marusawa, Miyuki**
**c/o Sony Corporation 7-35 Kitashinagawa**
**6-chome**
**Shinagawa-ku Tokyo(JP)**
Inventor: **Yasuhara, Nae**
**c/o Sony Corporation 7-35 Kitashinagawa**
**6-chome**
**Shinagawa-ku Tokyo(JP)**

(74) Representative: **Schmidt-Evers, Jürgen,**
**Dipl.-Ing. et al**
**Patentanwälte Mitscherlich, Gunschmann**
**Dr. Körber, Schmidt-Evers, Melzer, Dr. Schulz**
**Steinsdorfstrasse 10**
**W-8000 München 22(DE)**

(54) Coordinate information input apparatus.

(57) A coordinate information input apparatus comprises: a pen means (11) having stylus pen tip for inputting coordinate information; tablet having a flat and smooth input surface (10, 52) for obtaining the coordinate information by the pen means (11); and seal means (54) detachably attached to the input surface (10, 52) and having a concave portion (55) provided along a characteristic line of a picture to be input.

Fig. 1

Fig. 5

## BACKGROUND OF THE INVENTION

### Field of the Invention

The present invention relates to a coordinate information input apparatus which is suitable when, for example, a child uses it in a painting play and an auxiliary member to input coordinate information which is suitable when it is used in the case where a painting play is performed by using the coordinate input apparatus.

### Description of the Prior Art

An image forming apparatus in which a picture is drawn onto a tablet and the picture drawn on the tablet can be displayed on a monitor has been proposed. According to such an image input apparatus, a picture can be freely drawn on the basis of his inspiration and its preferable for a child to use the apparatus in a painting play.

In order to develop the play using such an image input apparatus, it is considered that a member on which a picture pattern such as picture of an animal, characters of an animation, and the like is printed is prepared and the picture pattern drawn on the member is trace written.

Therefore, as shown in, for instance, the specification of Japanese Patent Application No. 1-219820 (by SONY), there has already been proposed method whereby a play card on which a predetermined figure is printed is attached onto a drawing area of a tablet and the figure drawn on the play card is trace written.

However, since such a play card is fixed to the drawing area and is used, there is a problem such that it is impossible to execute operations such that a picture is freely moved and the painting play is executed while thinking a layout.

On the other hand, in the conventional play card, there is a problem such that since the card is not adhered onto the tablet, the card is floated up from the tablet and a hand writing pressure is unstable.

Therefore, there is considered a method whereby a member on which a picture or characters to perform the trace writing are drawn is set to a sealing shape, the sealing-shaped member is stuck to a drawing area on the tablet of the image input apparatus, and the figure drawn on the sealing-shaped member is trace written.

As a sealing-shaped member which is used for such a purpose, it is necessary that the member can be certainly fixed to the drawing area of the tablet such as not to easily move even if the trace writing is performed. In addition, the sealing-shaped member must be easily detachable such as to enjoy the painting play many times in accordance with a free conception.

On the other hand, it is necessary to sufficiently consider a thickness and a hardness of the sealing member in a manner such that coordinates can be certainly input on the tablet even if a trace writing is executed from the surface on the sealing member by a hand writing pressure of a child and the sealing member functions as a smooth guide in the case of drawing a picture by tracing a contour of the sealing member.

As a sealing member for trace writing, a sealing member which is fixed by using an adhesive agent is known. However, in the case of the sealing member which is fixed by the adhesive agent, there is a problem such that a dust or the like is adhered onto the sealing member as the sealing member is used many times and an adhering force becomes weak.

## OBJECTS AND SUMMARY OF THE INVENTION

It is, therefore, an object of the invention to provide a coordinate information input apparatus in which the information which was trace written by using a detachable sealing material can be input.

It is an another object of the invention to provide an auxiliary member to input coordinate information which can be easily attached to or detached from a drawing area of a tablet many times and in which an adhering force is not weakened even if the auxiliary member is used many times and which can be certainly fixed to an input surface.

According to an aspect of the invention there is provided a coordinate information input apparatus, comprising:

pen means having stylus pen tip for inputting coordinate information;

tablet having a flat and smooth input surface for obtaining the coordinate information by the pen means; and

seal means detachably attached to the input surface and having a concave portion provided along a characteristic line of a picture to be input.

According to another aspect of the invention, there is provided an auxiliary member for inputting coordinate information to an electronic apparatus, comprising:

sticking surface for sticking to an input surface for inputting coordinate information to the electronic apparatus;

guiding surface having a shape of a picture for supplying the coordinate information; and

a concave portion provided along a characteristic line of the picture for guiding a pen tip of said electronic apparatus so as to input coordinate information concerned in the picture;

wherein an external shape defined the sticking or guiding surface is smaller than the area of the input surface.

The above, and other, objects, features and advantage of the present invention will become readily apparent from the following detailed description thereof which is to be read in connection with the accompanying drawings.

BRIEF DESCRIPTION OF THE DRAWINGS

Fig. 1 is a perspective view showing a system construction of an embodiment of the invention;
Fig. 2 is a plan view showing a graphic computer to which the invention was applied;
Fig. 3 is an exploded perspective view showing the graphic computer to which the invention was applied;
Fig. 4 is a block diagram of the graphic computer to which the invention was applied;
Fig. 5 is a plan view of a play seal to which the invention was applied;
Figs. 6 to 9 are cross sectional views which are used to explain the play seal to which the invention was applied;
Figs. 10A and 10B are schematic diagrams which are used to explain the play seal to which the invention was applied;
Fig. 11 is a perspective view which is used for use explanation of the play seal to which the invention was applied; and
Figs. 12A to 12E are schematic diagrams which are used to explain the case where an animation is formed by using the play seal to which the invention was applied.

DETAILED DESCRIPTION OF THE PREFERRED EMBODIMENTS

An embodiment of the present invention will be described hereinbelow with reference to the drawings.

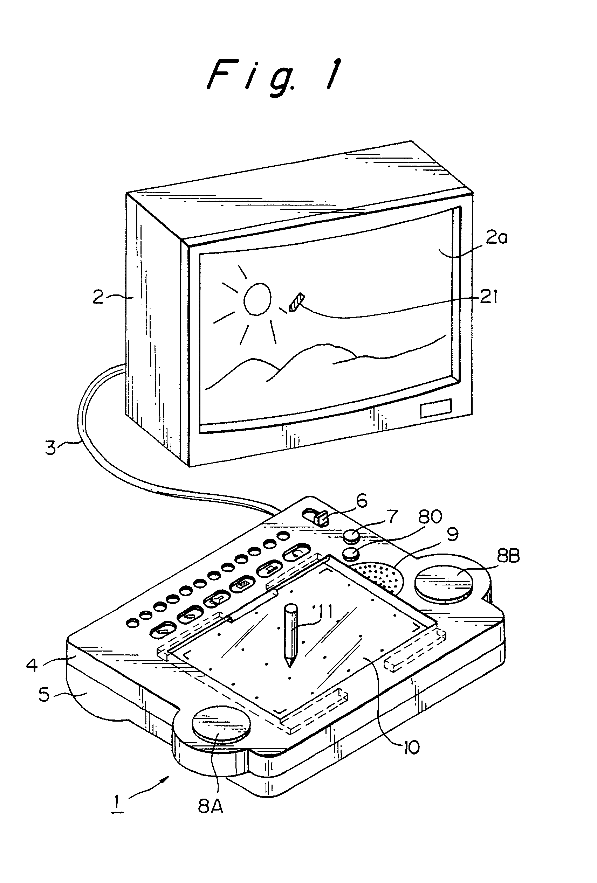

Fig. 1 shows a system construction of the embodiment. In Fig. 1, reference numeral 1 denotes a graphic computer and 2 indicates a monitor with a video signal input terminal. A video signal output terminal (which will be explained hereinlater) of the graphic computer 1 and the video signal input terminal of the monitor 2 are connected by a video cable 3. A cabinet of the graphic computer 1 is formed by an upper casing 4 and a lower casing 5. A sound generating section 9 which covers a power switch 6, a clear button 7, a sound button 80, and a speaker is provided at a right edge on the upper casing 4. Execution buttons 8A and 8B are provided at both edges on the upper casing 4. The power switch 6, clear button 7, sound button 80, and execution buttons 8A and 8B are independent mechanical switches, respectively.

Reference numeral 11 denotes an attached pen made of a plastic. As a basic operation, when a locus is drawn onto a tablet 10 by lightly pressing the attached pen 11 or a finger tip onto the tablet 10 in a state in which the execution button 8A and 8B was pressed, a cursor 21 having a pen shape is displayed on a screen 2a of the monitor 2, the cursor 21 is moved interlockingly with the locus of the finger tip or the like, and the locus is displayed as an image. When the clear button 7 is operated, all of the images on the screen 2a are erased and the apparatus waits for an input in the drawing mode.

When the sound button 80 is once operated, a predetermined sound is generated when a point on the tablet 10 is pressed. When the sound button 80 is operated once more, no sound is generated.

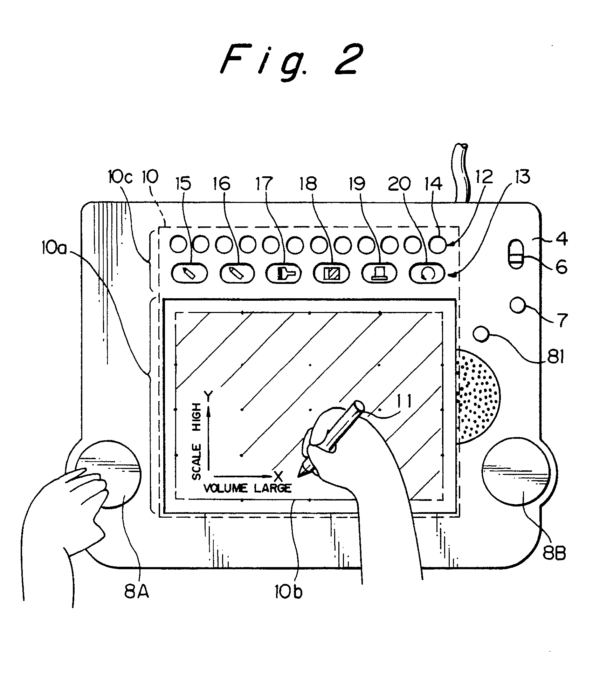

The coordinate input surface of the tablet 10 is divided into a drawing area 10a and a menu selecting area 10c as shown in Fig. 2. A portion (hatched portion) which is surrounded by a frame symbol in the drawing area 10a and is added with black dots at a predetermined pitch is an image forming area 10b. An aspect ratio of the image forming area 10b is set to be equal to an aspect ratio (3 : 4) of the screen of an ordinary monitor. On the other hand, a pixel ratio serving as a ratio of a resolution in the vertical direction (Y direction) of the input coordinates on the tablet 10 and a resolution in the lateral direction (X direction) is set to be equal to a pixel ratio of pixels of an ordinary monitor. Therefore, according to the embodiment, there is an advantage such that when a locus of an accurate circle is drawn onto the image forming area 10b, an image of an accurate circle is also displayed onto the screen 2a of the monitor 2. In order to make the play seal 52, which will be explained hereinlater, detachable, the surface of the drawing area 10a is set to a smooth surface.

On the other hand, a sound which is generated when the image forming area 10b is pressed by a finger tip or the like is set in a manner such that a sound volume continuously increases along an X axis of input coordinates (X, Y) and a scale continuously raises (up to about three octaves) along a Y axis.

The menu selecting area 10c on the tablet 10 is further divided into a color selecting area 12 and a tool selecting area 13. Twelve circular holes 14 are formed in the upper casing 4 in the upper portion of the color selecting area 12. Six long holes 15 to 20 are formed in the upper casing 4 in the upper portion of the tool selecting area 13. Twelve kinds of colors (black/blue/green/yellow/red/white and the like) can be designated by lightly pushing the tablet 10 in the twelve circular holes 14 by using the attached pen 11 or the like. Five kinds of tools (bold line, ultrabold line, brush, eraser, stamp) and a cancel function can be designated by lightly pushing the tablet 10 corresponding to six long holes 15 to 20. The results regarding which one of the twelve circular holes 14 and which on of the six long holes 15 to 20 were elected can by discriminated by the input coordinates to the tablet 10. In the embodiment as mentioned above, there is an advantage such that a mechanical section is simplified since designations of the color, tool and cancel function are also discriminated by the input coordinates. Further, there is an advantage such that other various functions can be also easily added by merely finely dividing or expanding the menu selecting area 10c of the tablet 10. For convenience of explanation, the twelve circular holes 14 are referred to as color selecting buttons 14 and six long holes 15 to 20 are referred to as a bold line button 15, an ultrabold line button 16, a brush button 17, an eraser button 18, a stamp button 19, and a cancel button 20, respectively, hereinlater. The function of the buttons 15 to 20 are as follows.

(1) Bold line button 15 ...

A free curve is drawn by a bold line of 2 x 2 dots.

(2) Ultrabold line button 16 ...

A free curve is drawn by 6 x 6 cylindrical dots.

(3) Brush button 17 ...

The cursor 21 in the screen 2a of the monitor 2 is set to a brush shape and a designated color is painted in the closed area.

(4) Eraser button 18 ...

The cursor 21 in the screen 2a of the monitor 2 is set to a shape of an eraser and the drawn figure is erased.

(5) Stamp button 19 ...

The image of the pattern which was selected from 28 kinds of stamps each consisting of 16 x 16 dots is formed at a desired position.

(6) Cancel button 20 ...

The display image is returned to the picture plane before one procedure. One procedure denotes a step which was performed for a period of time when the execution button 8A is pressed.

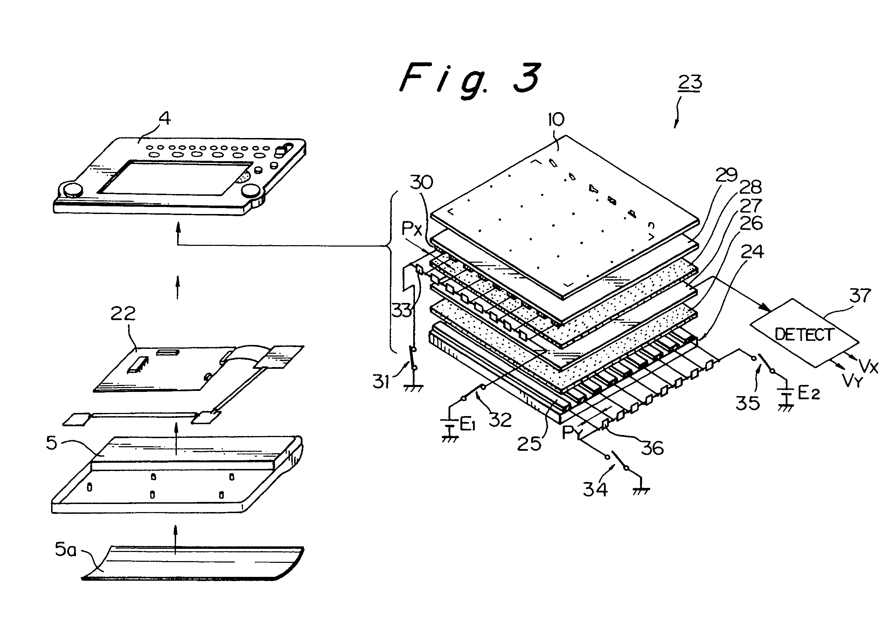

As shown in Fig. 3, the inside of the graphic computer 1 in the embodiment of Fig. 1 is constructed in a manner such that a pressure sensitive position detecting apparatus 23 including the tablet 10 and a printed circuit board 22 are sandwiched between the upper casing 4 and the lower casing 5 and a dry battery, a charging type battery, or the like as a power source is enclosed in the lower casing 5. Reference numeral 5a indicates a cover of the dry battery. However, the graphic computer 1 in the embodiment can also use an AC power adapter or the like as a power source.

A detailed construction of the pressure sensitive position detecting apparatus 23 in the embodiment will be described. In Fig. 3, thin electrodes 24 are formed on a first insulative board 24 at a pitch $P_Y$. A first pressure sensitive conductive sheet 26 made of a pressure sensitive conductive rubber, a conductive plate 27, a second pressure sensitive conductive sheets 28 made of a pressure sensitive conductive rubber, and a second insulative board 29 in which thin electrodes 30 are formed on a bottom surface at a pitch $P_X$ are sequentially overlaid on the first insulative board 24. The tablet 10 is arranged on the second insulative board 29. Each of the conductive plate 27, second insulative board 29, and tablet 10 has a flexibility. In the embodiment, a resolution in the X direction of the input coordinates is set to $P_X$ and a resolution in the Y direction is set to $P_Y$. $P_x : P_Y$ is set to the same value as a pixel ratio of the minimum pixels of a picture plane of an ordinary monitor. Values of the resolutions $P_X$ and $P_Y$ are set to, for example, about 0.3 mm.

The thin electrodes 30 on one side in the laterial direction of the second insulative board 29 are connected to the ground through a switching circuit 31. The thin electrodes 30 on the other side are connected to a DC voltage source of a voltage $E_1$ through a switching circuit 32. The thin electrodes 30 are sequentially connected by resistors 33 having the same resistance value. Similarly, the thin electrodes 25 on one side in the vertical direction of the first insulative board 24 are connected to the ground through a switching circuit 34. The thin electrodes 25 on the other side are connected to a DC voltage source of a voltage $E_2$ through a switching circuit 35. The thin electrodes 25 are sequentially connected by resistors 36 having the same resistance value. When a certain position of the tablet 10 is pressed, the pressure sensitive conductive sheets 26 and 28 of the pressed portion are made conductive, so that a voltage corresponding to the coordinate in the X direction is obtained at the conductive plate 27 by closing pair of switching circuits 31 and 32. A voltage corresponding to the coordinate in the Y direction is obtained on the conductive plate 27 by closing the pair of switching circuit 34 and 35. Reference numeral 37 denotes a coordinate detecting section. The coordinate detecting section 37 alternately closes the pair of switching circuits 31 and 32 or the pair of switching circuits 34 and 35 and holds a voltage generated on the conductive plate 27, thereby generating voltages ($V_X$ , $V_Y$) corresponding to the input coordinates (X, Y) of the tablet 10.

The invention is not limited to the tablet 10 of such a pressure sensitive type but can also use a tablet of a magneto-striction type.

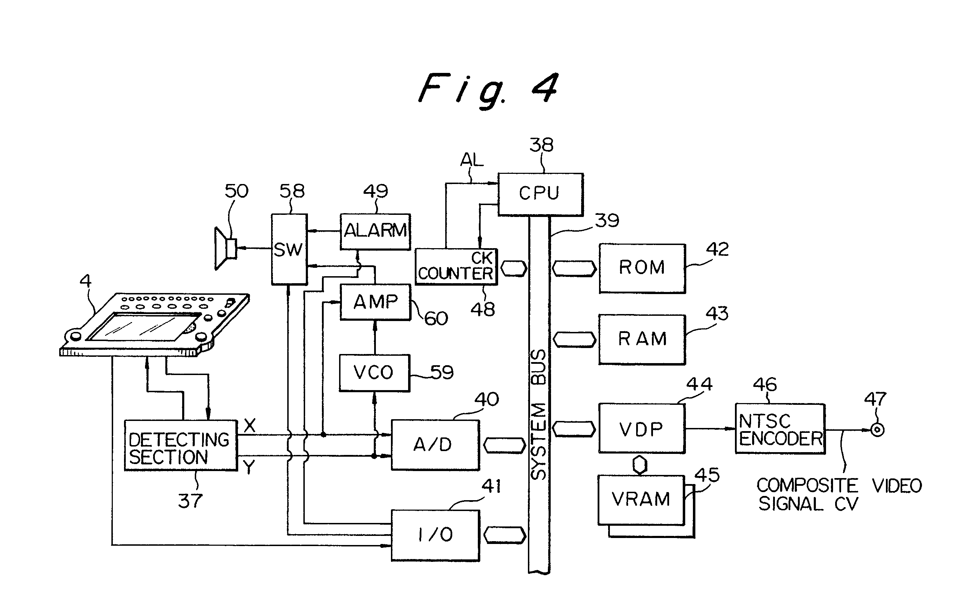

Fig. 4 shows a circuit construction of the graphic computer 1 in the embodiment. In Fig. 4, reference numeral 38 denotes a central processing unit (hereinbelow referred to as a CPU), 39 indicates a system bus of the CPU 38 comprising a data bus, an address bus, and a control bus, 42 an ROM which stores a program of the CPU 38 and an image data in a demonstrating mode, which will be described hereinlater, and 43 an RAM. The ROM 42 and the RAM 43 are connected to the system bus 39. On the other hand, reference numeral 40 denotes an analog/digital (A/D) converting section. The CPU 38 reads the voltages ($V_X$, $V_Y$) corresponding to the input coordinates (X, Y) which are supplied from the coordinate detecting section 37 through the A/D converting section. When the voltages ($V_X$, $V_Y$) correspond to the coordinate ($V_x$, $V_Y$) in the image forming area 10b of the tablet 10, the coordinates (X, Y) are written into the RAM 43. On the other hand, when the voltages ($V_X$, $V_Y$) correspond to the menu selecting area 10c (refer to Fig. 2) of the tablet 10, the CPU 38 discriminates which one of the buttons 14 and 15 to 20 was pressed on the basis of the coordinates (X, Y). The CPU writes color data or tool data corresponding to the discriminated button into the RAM 43. When the tool buttons 15 to 20 are selected, the CPU 38 also performs the operations corresponding to the selected tools. Further, the CPU 41 always monitors through an input/output (I/O) interface circuit 41 whether the mechanical switches (the clear button 7, a sound button 80, and the execution buttons 8A and 8B in Fig. 1) have been operated or not.

Reference numeral 44 denotes a video processor (hereinafter, refer to as a VDP) connected to the system bus 39; 45 indicates a video signal RAM (VRAM) having a capacity as much as two frames (two pages); and 46 an NTSC encoder. The VDP 44 reads the data of the input coordinates (X, Y), color data, and the like from the RAM 43 on the basis of a command of the CPU 38. The VDP 44 writes the color image data into a corresponding address in the VRAM 45. The VDP 44 also periodically reads out the color image data of one frame in the VRAM 34 and supplies to the NTSC encoder 46. The NTSC encoder 46 sequentially converts the supplied color image data into the composite video signal CV and supplied to a video signal output terminal 47. Since the VRAM 45 has the memory capacity of two pages in the embodiment, in a certain procedure (one procedure denotes a step which is performed for a period of time when the execution button 8A or 8B is operated as mentioned above), the VDP 44 writes and reads out the image data, for example, in a region of the first page. In the next procedure, after all of the image data of the first page were transferred to a region of the second page, the image data is written into and is read out from the region of the second page.

When the cancel button 20 of the tool selecting area 13 of the tablet 10 is pressed, if the CPU 38 generates a command to cancel to the VDP 44, the VDP 44 again reads out the image data in the region of the first page in the VRAM 45. The VDP 44 also writes the image data into the region of the first page when the coordinates are input. This means that the image of the screen 2a of the monitor 2 is returned to the image before one procedure by the operation of the cancel button 20. Therefore, there is an advantage such that even if an erroneous image was drawn during the drawing operation, the picture plane can be returned to the original image by a single touch operation.

On the other hand, in Fig. 4, reference numeral 48 denotes a counter; 49 an alarm circuit; and 50 a speaker arranged under the sound generating section 9 (refer to Fig. 1). The counter 48 always counts clock pulses of the CPU 38 and can clear a count value on the basis of a clear pulse from the CPU 38 at any time. When the count value of the counter 48 has reached a value corresponding to five minutes, that is, if the clear pulse from the CPU 38 is not supplied for five minutes, the counter 48 generates an alarm signal AL to the CPU 38. In the ordinary drawing mode, the CPU 38 generates an alarm operation signal to the alarm circuit 49 through the I/O interface circuit 41 in response to the alarm signal AL. The alarm circuit 49 comprises a timer, an oscillator, a synthesizer, a power amplifier, and the like. The alarm circuit 49 supplies a signal corresponding to a predetermined sound, a melody, or a message to the speaker 50 through a switching circuit 58 only for two minutes in response to the alarm operation command from the CPU 38. The counter 48, alarm circuit 49, and speaker 50 are provided to generate a warning sound to the user in the case where the user mainly forgot to turn off a power source.

On the other hand, the voltage $V_Y$ which is generated by the coordinate detecting section 37 is supplied to the switching circuit 58 through a voltage controlled oscillator (VCO) 59 and a variable gain amplifier 60. The voltage $V_x$ which is generated by the coordinate detecting section 37 is supplied to a gain control terminal of the variable gain amplifier 60. The CPU 38 performs the switching of the switching circuit 58 through the I/O interface circuit 41.

When the sound button 80 is once operated, the CPU 38 changes over the switching circuit 58 and supplies an output signal of the variable gain amplifier 60 to the speaker 50. When the sound button 80 is operated once more or when an alarm operation, which will be described hereinlater, is operated, the CPU 38 supplies an output signal of the alarm circuit 58 to the speaker 50. Therefore, when the sound button 57 is once operated, if certain coordinates (X, Y) on the tablet 10 are pressed, a sound whose sound volume and scale (frequency) respectively change in proportion to values X and Y is generated from the speaker 50.

It is also possible to construct in a manner such that the scale changes along the coordinate value X and the sound volume changes along the coordinate value Y. On the other hand, it is also possible to construct in a manner such that the scale and the like change along a diagonal line of the image forming area 10b.

In order to use the graphic computer 1 in the embodiment, as shown in Fig. 1, the video signal output terminal of the graphic computer 1 and the video signal input terminal of the monitor 2 are connected by the video cable 3. When the user slides the power switch 6 an sets to the ON side, a demonstrating indication showing a use example of the graphic computer 1 in the embodiment is displayed on the screen 2a of the monitor 2 for a predetermined time. Practically speaking, a pen as a cursor is displayed on the screen 2a to thereby draw a predetermined picture or an eraser as a cursor is displayed on the screen 2a to thereby erase the picture. The user can know a using method by the above operation.

The program for the demonstrating display has been written into the ROM 42 and includes the color data, tool data, data of a series of input coordinates (X, Y), and the like. The CPU 38 sequentially reads out those data and transfer to the RAM 43 and the VDP 44 also generates the image data corresponding to the data in the RAM 43. Thus, a demonstrating image is displayed in a form similar to the case where the operator actually draws a locus on the tablet 10. On the other hand, with the above construction, there is an advantage such that the capacity of the program for the demonstrating display in the ROM 42 can be relatively reduced.

When the user performs either one of the operation of the clear button 7 or the sound button 80, the operation of the execution button 8A or 8B, and the coordinate input (also including the menu selecting area 10c) onto the tablet 10 during the demonstrating display, the operation of the graphic computer 1 in the embodiment is set to the "drawing mode". All of the images on the screen 2a of the monitor 2 are erased and the apparatus waits for an input from the user. After the user pressed color selecting button 14, bold line button 15, or ultrabold line button 16 by using the attached pen 11, the finger tip, or the like and designated the tool, thee user freely draws a locus in the image forming area 10b by lightly pressing the attached pen 11 in this area in a state in which the execution button 8A or 8B was pressed. Thus, a figure which is perfectly analogous to the locus is sequentially drawn on the screen 2a of the monitor 2 with the designated color and the thickness by the cursor 21. In this case, in a state in which the execution button 8A or 8B is not operated, the cursor 21 merely moves on the screen 2a by using the image which has already been drawn as background. The locus corresponding to the movement of the cursor 21 is first left as an image by operating the execution button 8A or 8B. Therefore, for example, a positioning when transferring from a certain step to the next step in the painting can be a accurately performed.

Further, in the case where a sound generating mode is set by operating the sound button 80, the sound is continuously generated in accordance with the coordinates (X, Y) by sliding the finger tip or the like on the image forming area 10b of the tablet 10, so that the user can also enjoy the sound. In this case, since the sound volume and scale change in proportion to the coordinate values X and Y, the user can also play the melody or the like.

On the other hand, when the brush button 17 in the menu selecting area 10c is pressed, the cursor 21 is set so as to have the shape of the brush. By sliding the attached pen 11 or the like in the image forming area 10b, the designated color can be also painted in the inside of a closed figure (circle, quadrilateral, or the like) existing at a position near the locus of the movement of the cursor having the brush shape in the image which has already been drawn.

Further, when the eraser button 18 in the menu selecting area 10c is pressed and attached pen 11 or the like is pushed onto the image forming area 10b, the cursor of the shape of the eraser is displayed on the screen 2a of the monitor 2 by using the image which has already been drawn as a background. The image which has already been drawn can be partially erased by pressing the execution button 8A or 8B while moving the attached pen 11 or the like. However, in the case where the image was too erased, the display image can be returned to the picture plane before one procedure by pressing the cancel button 20 in the menu selecting area 10c.

When the stamp button 19 in the menu selecting area 10c is pressed, several kinds of stamp figures are displayed in the upper portion of the screen 2a of the monitor 2. For instance, by pressing a point on the tablet 10 corresponding to a desired figure among the stamp figures, such a figure is selected as a cursor. When the execution button 8A or 8B is pressed while sliding the attached pen 11 or the like on the tablet 10, a desired stamp figure can be displayed at a position where the execution button 8A or 8B was pressed. Moreover, the stapm figure can be also overlappingly displayed on a picture which has already been drawn. As mentioned above, the graphic computer 1 in the embodiment is integratedly constructed by the pressure sensitive position detecting apparatus 23 including the tablet 10, CPU 38, VDP 44, VRAM 45, NTSC encoder 46, and the like. Since the image can be easily formed merely by connecting to the monitor 2 by using the video cable 3, there is an advantage such that a system construction is simple and the system can be easily used even by a child. Therefore, the system in the embodiment is suitable when, for example, a child uses it in the painting play.

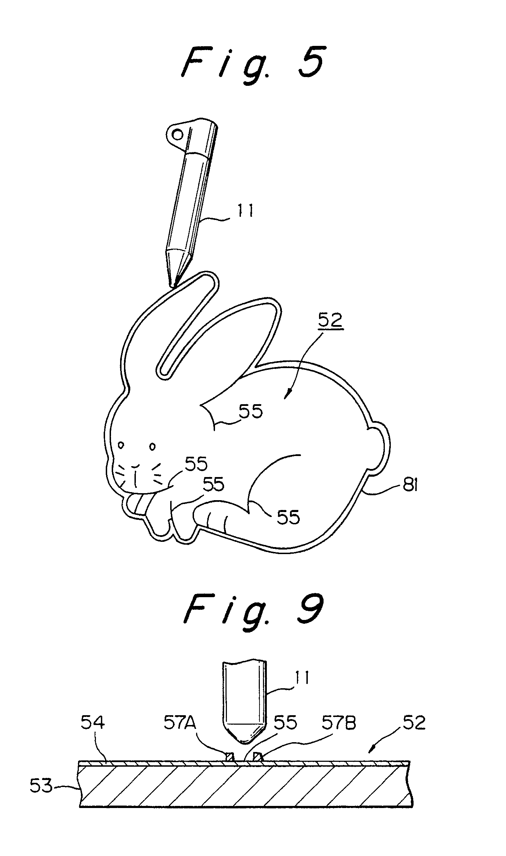

As shown in Fig. 5, a play seal 52 on which a predetermined picture pattern of characters are printed can be detachably attached to the drawing area 10a of the graphic computer 10. The track writing or various plays can be enjoyed by using the play seal 52.

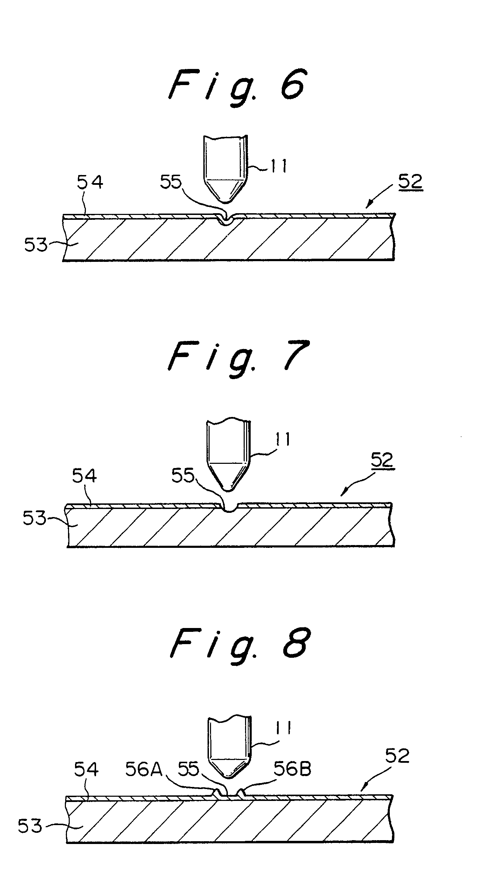

As a play seal 52, as shown in Fig. 6, a sealing member having an adsorbing property such as a porous urethane material which is adsorbed onto a smooth surface is used. Such a play seal 52 can be stably fixed to the drawing area 10a of the tablet 10 having a smooth surface. On the other hand, the surface of such a member can be printed in multicolors.

A protective film 54 is laminated onto a sealing member 53. A thickness of the sealing member 53 is set to a thickness of, for example, about 0.5 mm to 0.7 mm such that coordinates can be easily input onto the tablet by a hand writing pressure of a child.

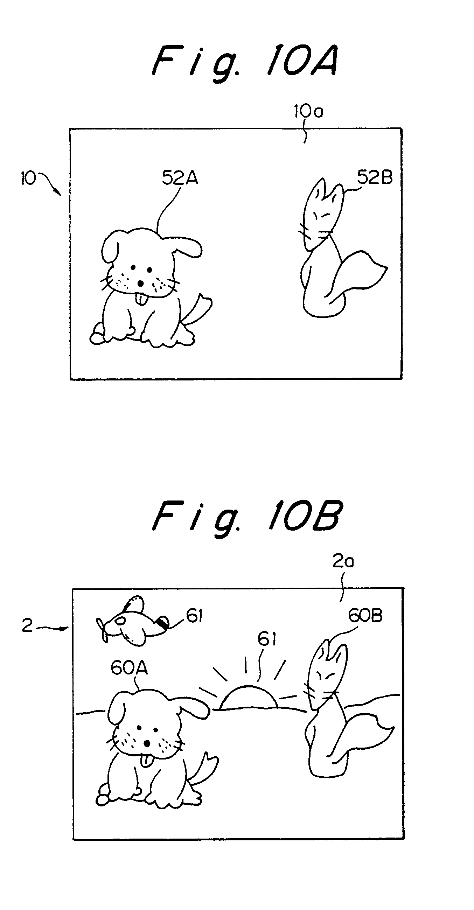

A stairway portion 81 is formed along the outer edge of the play seal 52 and a concave portion 55 is formed along a main outline of the picture pattern drawn on the play seal 52. As shown in Fig. 6, the concave portion 55 can be also formed in a manner such that the portion of the outline is pressed from the portion on the sealing member 53 on which the protective film 54 was laminated. As shown in Fig. 7, the protective film 54 of the outline portion on which the concave portion 55 is formed can be also eliminated. As shown in Fig. 7, by eliminating the protective film 54, a writing feeling in the case where a trace writing was executed by using the attached pen 11 can be made smooth. On the other hand, as shown in Fig. 8, the concave portion 55 can be also formed at the center of the outline portion by protruding both edges 56A and 56B of the protective film 54 of the outline portion. Further, as shown in Fig. 9, the concave portion 55 can be also formed at the center of the outline portion by protruding both edges 57A and 57B of the protective film 54 of the outline portion by painting.

A predetermined portion of the picture pattern of the play seal 52 is colored as necessary. A play such that a trace written picture pattern is colored can be performed by the coloring operation.

The whole play seal 52 is not always necessary to be transparent or translucent. This is because a locus of the trace writing can be known from the displayed picture plane on the monitor 2.

A using method of the play seal 52 will now be explained.

Since the drawing area 10a of the graphic computer 10 has a smooth surface, the play seal 52 can be easily attached even in any region in the drawing area 10a of the tablet 10. Since no adhesive agent is used, an adhering force is not deteriorated even if the play seal 52 was stuck and peeled off many times.

As shown in Fig. 10A, a child sticks play seals 52A and 52B at desired positions in the drawing area 10a while thinking a layout. Since the play seals 52A and 52B can be stuck at free positions as mentioned above, an imagination of the child can be raised. As shown in Fig. 7, when external shapes or main outlines of the play seals 52A and 52B are traced by using the attached pen 11, corresponding pictures 60A and 60B are displayed on the screen 2a of the monitor 2 as shown in Fig. 10B. Since the play seals 52A and 52B are fixed to the drawing area 10a in the embodiment, the trace writing can be performed without fixing the play seals 52A and 52B by pressing them. Further, the coloring operations can be executed in accordance with the drawing colors of the play seals 52A and 52B. On the other hand, as shown in Fig. 10B, by directly writing and inserting a picture into the drawing area 10b by using the attached pen 11, a picture 61 which was directly drawn can be displayed in addition to the tracing pictures 60A and 60B.

Moreover, a simple animation can be formed by using the play seal 52.

A forming procedure of an animation will now be explained.

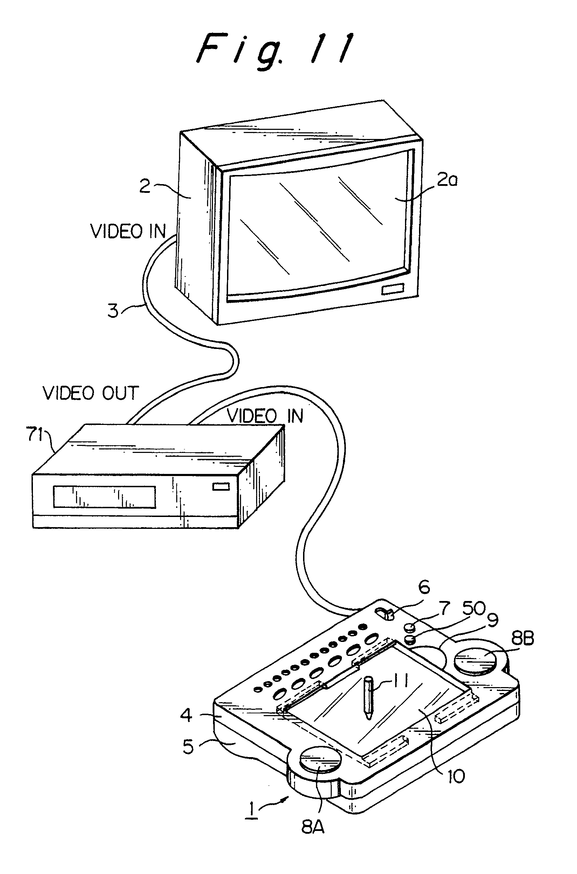

In the case where the animation is formed, as shown in Fig. 11, the video signal output terminal of the graphic computer 1 is connected to a video signal input terminal of a VTR 71 and a video signal output terminal of the VTR 71 is connected to a video signal input terminal of the monitor 2.

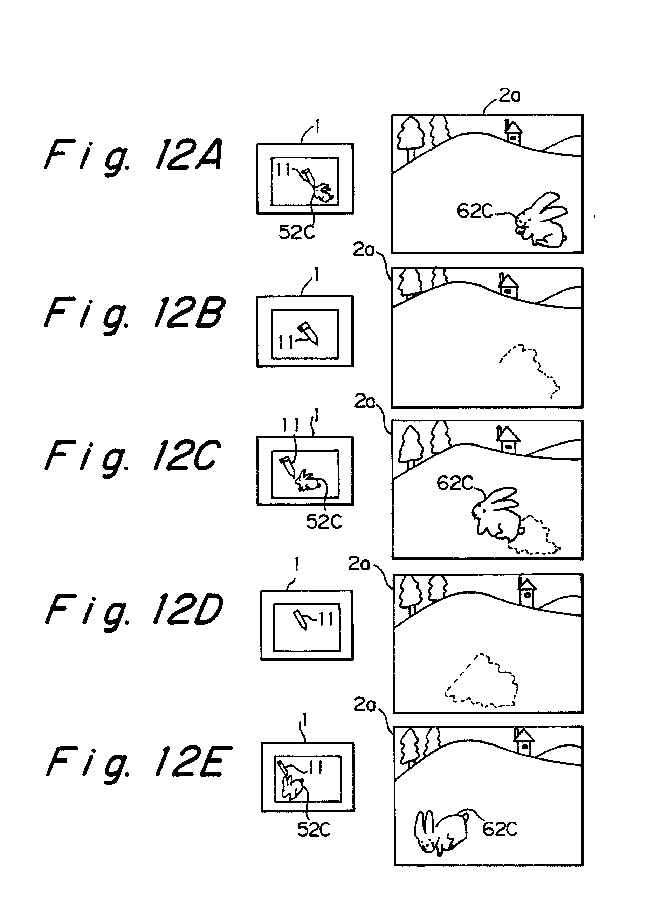

As shown in Fig. 12A, a play seal 52C is attached to drawing area 10a of the tablet 10, an external shape and an outline of the play seal 52C are traced by using the attached pen 11, and a tracing picture 62C of the play seal 52C is displayed on the screen 2a of the monitor 2. Further, a background picture is drawn on the image forming area 10b by using the attached pen 11 and the background picture is displayed on the screen 2a of monitor 2.

After such a picture plane was drawn, the picture plane is recorded for a few seconds by using the VTR 71.

As shown in Fig. 12B, the play seal 52C in the drawing area 10a of the tablet 10 is then peeled off and the tracing picture 62C of the play seal 52C is erased by the eraser display.

As shown in Fig. 12C, the play seal 52C is stuck at another position, the external shape and the outline of the play seal 52C are traced by using the attached pen 11, and the tracing picture 62C of the play seal 52C is displayed on the screen 2a of the monitor 2.

The picture plane is recorded for a few seconds by using the VTR 71.

As shown in Fig. 12D, the play seal 52C in the drawing area 10a of the tablet 10 is peeled off and the tracing picture 62C of the play seal 52C is erased.

As shown in Fig. 12E, the play seal 52C is further stuck at another position, the external shape and the outline of the play seal 52C are traced by using the attached pen 11, and the tracing picture 62C of the play seal 52C is displayed on the screen 2a of the monitor 2.

Similar operations are repeated hereinlater. When the tape which was formed by repeating such operations is reproduced the tracing picture 62C of the play seal 52C is seen as a moving image.

Further, a practice of characters can be performed by using the play seal 52 on which characters were drawn.

Moreover, by previously printing a predetermined curve on the play seal 52, a sound play can be performed. That is, when the play seal 52 on which the curve was printed is stuck to the drawing area 10a and a sound generating mode is set by operating the sound button 80 and the curve is traced, a predetermined melody is generated.

Furthermore, a puzzle play or a figure trace play can be executed by using the play seal 52.

As mentioned above, since the play seal 52 can be detachably attached at a free position, by using the play seal 52, an advanced play in which an imagination is high and a high learning effect is obtained can be performed.

According to the invention, the sealing member having the adsorbing property which is adsorbed to the smooth surface is used as a play seal. Therefore, the picture is freely moved and the play seal can be stuck many times at a free position in the drawing area on tablet having the smooth surface while thinking the layout. Since the play seal does not use an adhesive agent, the adsorbing force is not deteriorated even if the play seal is repeatedly used. Accordingly, the play seal can be used at a free conception and the play seal is stably fixed, so that an erroneous input which occurs due to a situation such that the play seal is pressed by the hand can be prevented. On the other hand, since a concave portion is formed on the characteristic line of a picture pattern, a trace writing can be easily performed even by a child. Further, the surface of the play seal can be colored, a friction on the surface of the play seal is small, and the pen can be smoothly slided.

By performing the trace writing by using the play seal, various plays which can improve the imagination and the learning effect can be performed. In addition, since the position the play seal can be freely moved many times a simple animation can be formed.

Having described a specific preferred embodiment of the present invention with reference to the accompanying drawings, it is to be understood that the invention is not limited to that precise embodiment, and that various changes and modifications may be effected therein by one skilled in the art without departing from the scope or the spirit of the invention as defined in the appended claims.

## Claims

1. A coordinate information input apparatus comprising:

   pen means (11) having stylus pen tip for inputting coordinate information;

   tablet having a flat and smooth input surface (10, 52) for obtaining said coordinate information by said pen means (11); and

   seal means (54) detachably attached to said input surface (10, 52) and having a concave portion (55) provided along a characteristic line of a picture to be input.

2. A coordinate information input apparatus according to claim 1, further comprising a video information generator (2, 3, 71) for generating video signal concerned with said coordinate information.

3. A coordinate information input apparatus according to claim 2, wherein said video signal is supplied to a peripheral apparatus for displaying said video signal.

4. A coordinate information input apparatus according to claim 3, wherein said video signal is displayed on said peripheral apparatus as a tracing pattern of said pen means (11) by leading said concave portion (55) of said seal means (54).

5. An auxiliary member for inputting coordinate information to an electronic apparatus, comprising:

sticking surface (54) for sticking to an input surface for inputting said coordinate information to said electronic apparatus;

guiding surface having a shape of a picture for supplying said coordinate information; and

a concave portion (55) provided along a characteristic line of said picture for guiding a pen tip (11) of said electronic apparatus so as to input coordinate information concerned in said picture;

wherein an external shape defined by said sticking or guiding surface is smaller than the area of said input surface.

6. An auxiliary member for inputting coordinate information according to claim 5, wherein said pen means (11) is guided by said concave portion (55).

# Fig. 1

# Fig. 2

SCALE HIGH

Y

X

VOLUME LARGE

Fig. 3

Fig. 4

# Fig. 5

# Fig. 9

# Fig. 6

# Fig. 7

# Fig. 8

# Fig. 10A

# Fig. 10B

# Fig. 11

Fig. 12A

Fig. 12B

Fig. 12C

Fig. 12D

Fig. 12E

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-3 804 640   (H.W. BAUMANN) <br> * Claims * <br> − − − | 1-5 | G 06 F 3/033 |
| A | GB-A-2 205 534   (R.L. MACKAY MILLER) <br> * Abstract; figure 1; page 1, lines 19-23; page 2, lines 26-34 * <br> − − − − − | 1,5 | |

| | | | TECHNICAL FIELDS SEARCHED (Int. Cl.5) |
|---|---|---|---|
| | | | G 06 F <br> A 63 F <br> G 09 B <br> B 43 L |

The present search report has been drawn up for all claims

| Place of search | Date of completion of search | Examiner |
|---|---|---|
| The Hague | 07 August 91 | LA GIOIA C. |